# EUROPEAN PATENT SPECIFICATION

(11) **EP 2 568 817 B1**
(45) Date of publication and mention of the grant of the patent: **15.02.2017**
(21) Application number: 10850920.9
(22) Date of filing: 25.11.2010
(51) Int. Cl.: A23C 19/04, A23C 19/032, A23C 19/068

(54) **METHOD OF OBTAINING FRESH SPUN CHEESE**
VERFAHREN ZUR HERSTELLUNG VON FRISCHEM GEZOGENEM KÄSE
PROCÉDÉ D'OBTENTION DE FROMAGE FRAIS FILÉ

(30) Priority: 12.05.2010 RO 201000426
(43) Date of publication of application: 20.03.2013
(73) Proprietor: Ece, Abdulvahit, 335600 Jud. Hunedoara (RO)
(72) Inventor: MORARIU, Louisa-Karina, R-335600 Jud. Hunedoara (RO)
(86) International application number: PCT/RO2010/000019
(87) International publication number: WO 2011/142684

(56) References cited:
- US-A- 5 200 216
- US-A- 5 942 263

## Description

The invention refers to method of obtaining fresh spun cheese. Particularly, the invention refers to the method of obtaining a new sort of cheese that has no paste and has a fibrous and elastic texture.

In the food industry there is a request for cheese with the taste of fresh and easily acidified dairy products.

Cheese contains almost all milk components, but in much higher proportions due to their concentration following whey elimination and the retention of lipids, lipo-soluble vitamins and mineral salts in the mass of casein curd of the lipids. Thus, enzymatic curdling cheeses are true food product concentrates of nutritious substances. The presence of vitamin D together with the high content of calcium and phosphorus, as well as their optimum ratio, determines cheeses to be considered the best sources for these elements. They are poor in potassium and rich in sodium.

In most cheeses there is no lactose, or there are very small quantities (1 - 3 g/100 g) because part of it transforms to whey, and the one retained by the cheese curd is partially or entirely transformed into lactic acid during cheese curing. This is why cheeses are recommended in the diets of persons suffering from lactose intolerance or diabetes.

Cheeses are food products with special characteristics under the aspect of their input of important minerals from a nutritious point of view: calcium, phosphorus, magnesium.

Moreover, in the food industry there are no sorts of cheese with no paste, this being the only one, which proves the novelty and invention characteristics of this cheese type and of its method of production, consumable both as an appetizer and in other specific culinary courses.

Cheeses are products obtained by coagulation of the casein specific to the resulted curd. The type range is very wide, depending on the nature of the milk, the consistency and the technological process.

**Fresh cheeses** are obtained through the acid coagulation of casein and are characterized by their creamy consistency, high humidity, lactic fermentation taste and flavor. They contain 13-16% proteins and a variable lipids percentage, depending on the type (0.5-9%). They have a high dietary value due to the high methionine and choline content, representing a protective food product for the hepatic cell.

**Fermented cheeses - cured in brine** are obtained through the enzymatic coagulation, short term curing in brine, after processing the ewe-cheese, with whey elimination Within the type, "telemea" cheese is on the first place in cheese production in our country, being considered a traditional product. It has a nutritious value similar to meat (approximately 20% proteins; 25-30% lipids); the calcium content is above 500 mg / 100 g.

**Steamed cheeses** have as specific technological operation steaming ewe-cheese resulting from cow, sheep or mixed milk, in a solution of *Na₂Cl* 12%. The result is mass with plastic properties, which is introduced in characteristic shapes and curing for a long time. They contain approximately 24% proteins and 19-25% lipids.

The type of cheese that we present has a method of production that combines elements characteristic to the 3 groups presented above, respectively: fresh cheeses, fermented-cured in brine and steamed but it is also substantially different from those because:
1. compared to fresh cheese, it presents similarities determined by high humidity, fermentation taste and flavor, but it is different from this type through its creamy consistency and the protein content.
2. compared to cheeses fermented-cured in brine, it presents similarities determined by the enzymatic coagulation, short term curing, ewe-cheese processing with whey elimination, but it is different through the higher protein content and the other kneading, stretching operations, the method of production and the elastic and fibrous aspect with no compact mass.
3. compared to steamed cheeses it presents similarities regarding the final resulted product, which is a mass of plastic properties, but is different from this group with regards to the paste consistency with homogenous mass, of the steaming process, the registered protean value.

Due to these differences in relation to the other cheese types, from which it combines some common parts, this new cheese type results, with an equally new method of production with the following characteristics:
- it is a fresh fermented cheese with a low curing degree
- it is a cheese obtained from unpasteurized milk
- it is a paste-free cheese
- it is a white cheese
- it is a cheese with no compact mass
- it is a cheese with a semi-hard, fibrous and elastic consistency
- it does not have a crust
- it is not crumbly
- it is not-sticky
- it has a crusty surface
- it has the aspect of a "thread bundle"

There is no product that entirely shows similarities with this description, but small similarities under the aspect of fibrous and elastic consistency, but obtained through another method and which has a crust and a compact creamy mass. It is the Mozzarella cheese, respectively American patents US005925398A and US005567464A and the French patent WO 2005/032266 A2 by which a fibrous and elastic consistency cheese is obtained, but by adding yogurt to the mozzarella cheese, used as raw material and processed into an extruder.

The inventor of the present invention concluded that the reproduction of the method according to the above mentioned American patents leads to a product with a lower protean value, a high fat quantity in the dry substance, a product that contains emulsifiers -sodium nitrate-in different quantities for conservation under normal temperature conditions, without the need of conservation in refrigerated areas, through the process of steaming of the mozzarella cheese and then by processing it with the help of a double extruder and incorporating the sodium nitrate in two stages.

A drawback of these methods is represented by the short conservation period, the low content of protean mass necessary for a balanced nutrition and the consumption period after only a few weeks after production due to the necessary curing time.

Another drawback is determined by the short conservation time after unpacking, by the addition of food additives as emulsifiers: citrates or nitrates, by its aspect and consistency.

One object of the present invention is to provide a cheese product totally different from the ones presented above.

Another object of the present invention is to provide a rapid a cheap preparation method for a new market product.

Another object of the present invention is to provide a fat-free product with a high protean value, a low fat content, an ecological and natural product that does not contain food additives.

Another object of the present invention is the preservation effect of the cheese that is provided both my reducing the whey quantity of the mass because the 4.32 - 5.43 pH that is characteristic to this type of cheese leads to an almost complete elimination of the whey from the cheese mass and an absorption of water into the brine.

Another object of the present invention is given by the acidification resulting from the lactic fermentation that slow the development of putrefaction bacteria since this invention is based on a method according to which sour milk is no longer submitted to the coagulation operation of naturally fermented milk by which yogurt is formed but only to coagulation by adding enzymatic curd.

The casein-phospho calcium complex is modified more at temperatures above 75 C. The existent balance between casein-phospho micelle and soluble mineral salts is affected, one part of the soluble calcium salts passing into the insoluble tricalcium phosphate. These modifications produce difficulties in coagulating milk with curd, which drawback is removed by adding calcium chloride.

At temperatures above 70 C, the lactose is partially decomposed by balancing acids, alcohols and aldehyde.

Heating up at high temperature favors the formation of a complex between proteins and lactose, producing milk browning - the Maillard reaction. This reaction reduces the nutritious value of the milk by blocking the lysine in the formed complex.

The inventor realized that with the help of this specific preparation method an unclassified cheese type is obtained, which takes over characteristics, similarities and certain parts of the production method of several cheeses.

Thus, with the help of this specific preparation method a paste-free cheese is obtained, which has and entire fibrous and elastic mass, breakable by hand, that is it can be split manually in strips without crumbling, it has an easily acid fermented taste of fresh cheese, it is fat-free and with a normal fat content, it presents an entirely white surface and it is a fresh pasteurized and rapidly cured product.

In a preferred realization example for the method, a cheese product is obtained, with a fibrous consistency with no paste, homogenous and compact, the flavor of a fresh yet naturally cured cheese showing a good preservation quality.

In the preparation procedure with the help of this method specific to the present invention, a fresh non-fat spun cheese.

In an example of this classification, the following types of uncured or slightly cured cheese products can be found, such as: mozzarella, sweet cow cheese, pressed cow cheese, non-fat cheese, ricotta, ricotone, spun paste, scamorza.

According to the Lexicon " the curing degree of cheeses represents the ratio between soluble nitrous fractions and the total produced nitrogen, at a certain moment of the curing process.

The curing volume is determined by the ratio between the water soluble nitrogen and the total nitrogen.

Produced cheeses can be grouped as such:
- very low curing degree: up to 15 %
- low curing degree : 15 - 30 %
- high curing degree: 30 - 50 %
- very low curing degree: 50 - 80 %

To exemplify, it is shown that the first group, with a very low curing degree, includes fresh cheeses and the following group includes brine cheeses and those with steamed paste.

Because the cheese type whose method of production is presented here has a ratio between water-soluble nitrogen and total nitrogen of 10-20 % it is part of the fresh and brine cheese category.

The method complying with the patent are subsequently explained, but not limited whatsoever, through the following examples:

### Example 1

Heat 1000 1 of milk at the temperature of 28 - 30 C by steam ebullition at the pressure of 2 atmospheres.

Then filtrate the milk for possible impurities and other foreign bodies.

After filtration, milk is stored in a 1000 1 tank, from where it is transferred into the separator at a speed of 7.000 rot./min, the result being milk with a thickness of 0,15 % in volume.

This is the normalization operation after which the milk has a uniform thickness throughout its entire mass.

After these prior operations, the milk is left to settle, which is when milk souring is produced by natural lactose fermentation determined by the presence of lactic ferments that transform it into lactic acids at an optimum temperature of 28-30C. This operation is considered finished after a time period influenced by the season and the temperature of the production space and which is generally marked by a pH of 5,4 or if, when taking a quantity of the milk left to sour with a spoon and putting it over a flame to heat, the sour milk starts to curdle, separating from the whey. The so-called "curdling" marks the end of this operation, which is particularly important because, if the milk isn't sufficiently well curdled, the final product cannot be obtained, which in our case is the fresh non-fat spun cheese.

This operation is the most sensitive one.

A 8-20 ml quantity of liquid enzymatic curd is introduced in the total mass of sour milk, of 1:15000, which is well incorporated in the entire mass of sour milk.

Immediately after incorporating the liquid enzymatic curd follows the second heating of the sour milk through the same installation for steam ebullition, until the temperature of the sour milk mass at the temperature of 65-70 C..

After reaching this optimum temperature the milk heating and temperature stabilization around this temperature is stopped and then in the total cheese mass that starts to form a new quantity of liquid enzymatic curd is added, respectively 8-20 ml, continuing the mixing operation until the complete formation of the ewe-cheese block.

After formation the block is only pressed to remove the whey.

The newly formed cheese block of approximately 100 kg is left in the tank in which it was obtained and 10 kg pieces are cut from it, which are processed separately in another tank.

This tank is exclusively used to take out the whey and for manual kneading, being necessary to carry out the kneading this way in order to obtain the fibrous, uniform aspect of the entire surface of fresh cheese.

After these operations a 40 cm piece is obtained, which is hung to drain and which will subsequently double its own length while it drains, respectively up to the moment it is 100-150% longer than initially.

Subsequently it will be kept in brine of 10% solution for approximately 24 hours, and after that it is taken out and left to dry around 2-3 hours then it is cut into pieces of different weights and packed in vacuous plastic foil.

From this example a fresh non-fat spun cheese is obtained, with the following characteristics:
Water: 61.32%
Fat: 1.5%
Fat in dry substance: 41.58 %
Proteins: 39.39 %
Salt: 7.67 %
Water-soluble nitrogen/Total nitrogen - 20,18 %
pH: 5.43

### Example 2

Example 1 was repeated with milk that was run through the separator and the normalization process was carried out for milk with a fat content of 0.38% in volume.

After following the exact same stages in example 1, the result is a fresh spun cheese with a normal fat content, with the following characteristics:
Water: 44 %
Fat: 3.8%
Fat in dry substance: 45 %
Proteins: 33 %
Salt: 5.5 %
Water-soluble nitrogen/Total nitrogen - 10,65 %
pH: 4.7

## Claims

1. Method of obtaining a "fresh spun cheese" product starting from fresh milk, comprising the following production stages:
a) heating the milk at a temperature between 28 - 32°C;
b) milk filtration;
c) milk degreasing;
d) lactic fermentation for a sufficient time up to a pH of 5.4;
e) addition of liquid enzymatic curd in a proportion of 7,5 - 18,5 % in volume reported to the total mass of the mixture;
f) heating the mixture by steam ebullition up to the temperature of 65 - 70°C, followed by the addition of a second part of liquid enzymatic curd;
g) formation of a cheese block and cutting into pieces;
h) manual processing by kneading until a cheese mass with fibrous and elastic texture is obtained;
i) suspension of the cheese mass on supports to eliminate the remaining whey and to stretch it under its own weight to become 100-150% more stretched and spread;
j) introducing and keeping the cheese mass in brine with a concentration of 12-17% for approximately 20-24 hours to adjust humidity, decrease the acidity and improve taste as well as to achieve preservation by inhibiting the development of microorganisms.
k) eliminating the brine, drying, portioning, packing and storage.

2. Method according to claim 1, wherein stage c) is carried out up to a fat content of the milk of 0.15% v/v, to obtain a fresh non-fat spun cheese product

3. Method according to claim 1, wherein stage c) is carried out up to a fat content of the milk of 0.3% v/v, to obtain a fresh spun cheese product with a low fat content.

4. Method according to claim 3, wherein stage d) is shortened by adding the previously resulted whey.

5. Method according to any of the claims 1 to 3, further comprising the addition of flavors, colorants, preservatives and other additives and bacterial cultures adequate for food products, as well as microorganisms.

6. Method according to any of the claims 1 to 3, further comprising the addition of ingredients such as olive, fruit, vegetable pieces, greens and olive oil.

7. Method according to any of claims 1 to 6, wherein stages a)-g) are accomplished by mechanical and thermal treatment using a centrifuge separator, a mixer, a steam generator with the corresponding ebullition installation.

## Patentansprüche

1. Herstellungsverfahren des Produkts faseriges Frischbruchkäse aus Frischmilch, mit den nachstehenden Produktionsabschnitten:
a) Aufwärmen der Milch bei einer Temperatur zwischen 28°C- 32°C;
b) Filtern der Milch;
c) Entfetten der Milch;
d) Laktische Gärung, für eine hinreichend lange Zeit, um einen pH-Wert von 5,4 zu erreichen;
e) Beigabe der flüssigen enzymatischen Molke in einem Verhältnis von 7,5 - 18,5% als Volumen bezogen aufs Gesamtgewicht des Gemenges;
f) Aufwärmen des Gemenges durch Dampfsieden bis hin zur Temperatur von 65°C - 70°C, gefolgt von der Beigabe zweiten Teilmenge flüssiger enzymatischer Molke;
g) Herausbilden des Käselaibs und sein Aufschneiden in Stücken;
h) Manuelle Verarbeitung durch Kneten, bis eine Käsemasse mit faseriger und elastischer Textur erzielt wird;
i) Aufhängen der Käsemasse an Stützen zur Entfernung der verbliebenen Molke und um ihre Oberfläche um 100-150%, unter der Einwirkung des Eigengewichts, zu vergrößern;
j) Eintunken und Aufbewahrung der Käsemasse in einer Salzlake mit einer Konzentration von 12-17%, ungefähr 20-24 Stunden lang, zur Feuchtigkeitsregelung, Minderung des Säuregrads und Geschmacksverbesserung, sowie zur Erzielung eines Konservierungsgrads durch Entwicklungshemmung der Mikroorganismen;
k) Entfernung der Lake, Trocknung, Portionieren, Verpackung und Lagerung.

2. Verfahren nach der Ansprüche 1, in welches der Abschnitt c) bis zu einem Fettgehalt der Milch von 0,15% v/v, zur Erzielung eines fettefreien Frischprodukts aus Faserkäse, durchgeführt wird.

3. Verfahren nach der Ansprüche 1, in welches der Abschnitt c) bis zu einem Fettgehalt der Milch von 0.3% v/v, zur Erzielung eines Frischprodukts aus Faserkäse mit geringem Fettgehalt, durchgeführt wird.

4. Verfahren nach der Ansprüche 3, in welches der Abschnitt d) durch Beigabe der vorherig entstandenen Molke zeitlich gekürzt wird.

5. Verfahren nach jeder der Ansprüchen von 1 bis 3, weiterhin die Beigabe von Aromen, Farbstoffen, Konservierungsmitteln und von anderen, den Lebensmittelprodukten angemessenen, Additiven und Bakterienkulturen, sowie von Mikroorganismen, umfassend.

6. Verfahren nach jeder der Ansprüchen von 1 bis 3, weiterhin die Beigabe von Zutaten wie beispielsweise Oliven, Obst, Gemüsestücke, Kräuter und Olivenöl umfassend.

7. Verfahren nach jeder der Ansprüchen von 1 bis 6, in denen die Sätze a) - g) dadurch eingehalten werden, indem der Einsatz der mechanischen und thermischen Behandlung, unter Verwendung eines Zentrifugalabscheiders, eines Mischers, eines Dampferzeugers mit dazugehöriger Siedeanlage, erfolgt.

## Revendications

1. Méthode d'obtenir fromage frais fibreux de lait frais, avec les suivantes phases de production:
a) Chauffage du lait à température entre 28°C - 32°C;
b) Filtration du lait;
c) Dégraissage du lait;
d) Fermentation lactique suffisamment de temps pour atteindre un pH de 5,4;
e) L'addition du présure enzymatique liquide en poids de 7,5 - 18,5% comme volume rapporté au poids total du mélange;
f) Chauffage du mélange par ébullition avec vapeur jusqu'à la température de 65°C - 70°C, suivi par l'ajout de la deuxième partie de présure enzymatique liquide;
g) Formation du bloc de fromage et son découpage en morceaux;
h) Moulage manuel par pétrissage jusqu'on obtient une masse de fromage d'une texture fibreuse et élastique ;
i) L'accrochage de la masse de fromage a des supports pour éliminer le lactosérum resté et pour l'allonger et augmenter la surface avec 100-150% sous l'action du propre poids;
j) Introduction et conservation de la masse de fromage dans une saumure d'une concentration de 12-17% pendant environ 20-24 heures pour régler l'humidité, réduire l'acidité et améliorer le goût, ainsi que pour obtenir un degré de conservation par l'inhibition du développement des micro-organismes;
k) Elimination de la saumure, le séchage, le découpe, l'emballage et le stockage.

2. Méthode selon la revendication 1 dans laquelle la phase c) se déroule jusqu' un teneur en matières grasses du lait de 0,15% v/v, pour obtenir un produit frais de fromage fibreux, pauvre en matières grasses.

3. Méthode selon la revendication 1, dans laquelle la phase c) se déroule jusqu'un teneur en matières grasses du lait de 0.3% v/v, pour obtenir un produit frais de fromage fibreux, pauvre en matières grasses.

4. Méthode selon la revendication 3, dans laquelle la phase d) est raccourcie par l'addition du lactosérum résulté antérieurement.

5. Méthode selon l'une quelconque des revendications 1 à 3, consistant à continuation en l'addition des arômes, colorants, conservateurs et autres additifs et cultures bactériennes adéquates aux produits alimentaires, ainsi que les micro-organismes.

6. Méthode selon l'une quelconque des revendications 1 à 3, consistant à continuation en l'addition des ingrédients comme olives, fruits, morceaux de légumes, verdures et huile d'olive.

7. Méthode selon l'une quelconque des revendications 1 à 6, dans lesquelles les phases a) - g) sont accomplies para traitement thermique et mécanique en utilisant un séparateur centrifuge, un mixer, un générateur à vapeur avec l'installation d'ébullition correspondante.
